(19) **Europäisches Patentamt / European Patent Office / Office européen des brevets**

(11) **EP 1 489 370 B1**

(12) **EUROPEAN PATENT SPECIFICATION**

(45) Date of publication and mention
of the grant of the patent:
**24.01.2007 Bulletin 2007/04**

(51) Int Cl.:
*F25B 49/02* (2006.01)    *F25B 27/00* (2006.01)
*B60H 1/32* (2006.01)

(21) Application number: **04253518.7**

(22) Date of filing: **11.06.2004**

(54) **Refrigeration cycle control unit**

Regeleinheit für einen Kühlkreislauf

Unité de commande pour un circuit frigorifique

(84) Designated Contracting States:
**DE FR**

(30) Priority: **20.06.2003 JP 2003175705**

(43) Date of publication of application:
**22.12.2004 Bulletin 2004/52**

(73) Proprietor: **Sanden Corporation**
**Isesaki-shi,**
**Gunma 372-8502 (JP)**

(72) Inventors:
- **Suzuki, Kenichi**
  **Isesaki-shi**
  **Gunma 372-8502 (JP)**
- **Imai, Tomonori**
  **Isesaki-shi**
  **Gunma 372-8502 (JP)**
- **Inoue, Atsuo**
  **Isesaki-shi**
  **Gunma 372-8502 (JP)**

- **Shiina, Masaki**
  **Isesaki-shi**
  **Gunma 372-8502 (JP)**

(74) Representative: **Haley, Stephen**
**Gill Jennings & Every LLP**
**Broadgate House**
**7 Eldon Street**
**London EC2M 7LH (GB)**

(56) References cited:
**EP-A- 1 162 419**    **EP-A- 1 367 344**
**WO-A-03/036184**    **US-A- 4 841 736**
**US-A- 5 172 563**    **US-A1- 2003 051 495**

- **PATENT ABSTRACTS OF JAPAN vol. 1999, no.
12, 29 October 1999 (1999-10-29) -& JP 11 201596
A (MATSUSHITA ELECTRIC IND CO LTD;
MATSUSHITA SEIKO CO LTD), 30 July 1999
(1999-07-30)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a control unit for a refrigeration cycle having a variable displacement compressor controlled by an external control signal, and, more specifically, to a refrigeration cycle control unit which can control a discharge pressure of the compressor by controlling a displacement of the compressor by estimating the discharge pressure of the compressor.

In a conventional control of a discharge pressure of a compressor for a refrigeration cycle having a compressor, a condenser and an evaporator of refrigerant, an excessive increase of the discharge pressure of refrigerant is prevented by detecting the refrigerant discharge pressure of the compressor, a refrigerant pressure in the condenser or a refrigerant pressure at a position before an expansion valve and the like by using a sensor, etc.

However, in such a conventional control system, there is a problem that a cost of the whole of the system increases by providing a detector such as a sensor. Further, in a case where a sensor is provided at a position near a condenser, a detected value may be different from a discharge pressure of a compressor, and therefore, a desirable control may not be carried out. Furthermore, if a discharge pressure of a compressor itself cannot be obtained, from the viewpoint of protection of the compressor, it may be difficult to protect the compressor quickly and adequately, and there may occur an inconvenience due to an undesirable increase in pressure.

Accordingly, it would be desirable to provide a refrigeration cycle control unit in which, in a refrigeration cycle having an external signal control type variable displacement compressor, a high-pressure side pressure of the refrigeration cycle, that is, a discharge pressure of the compressor, is estimated, thereby controlling the discharge pressure at an optimum value. Further, it would be desirable to make it unnecessary to detect a high-pressure side pressure of the refrigeration cycle with a sensor, etc., by estimating a discharge pressure of the compressor, thereby making a more inexpensive system.

US-A-4841736 discloses a method for controlling the operation of a variable displacement refrigerant compressor for a car air-conditioner.

WO 03/036184 discloses another method for controlling the operation of a variable displacement compressor.

According to a first aspect of the invention, there is provided a refrigeration cycle control unit, being for a refrigeration cycle having a compressor, which is a variable displacement compressor a displacement of which is controlled by an external control signal, a condenser of refrigerant, and an evaporator of refrigerant,
a suction pressure estimation or detection means arranged to estimate or detect a physical value with a correlation with a suction pressure of the compressor; the unit being characterised in that it comprises:

   a pressure difference estimation or detection means arranged to estimate or detect a physical value with a correlation with a pressure difference between a discharge pressure and said suction pressure of said compressor; and
   a discharge pressure estimation means arranged to estimate said discharge pressure of said compressor by referring to said physical value with a correlation with said suction pressure of said compressor estimated or detected by said suction pressure estimation or detection means, and said physical value with a correlation with a pressure difference between said discharge pressure and said suction pressure of said compressor estimated or detected by said pressure difference estimation or detection means.

Namely, without providing a pressure detection sensor, the discharge pressure of the compressor is estimated from the physical value with a correlation with the suction pressure of the compressor and the physical value with a correlation with a pressure difference between the discharge pressure and the suction pressure.

According to a second aspect of the invention, there is provided a refrigeration cycle control unit, being for a refrigeration cycle having a compressor, which is a variable displacement compressor a displacement of which is controlled by controlling a pressure difference between a discharge pressure of said compressor and a suction pressure of said compressor by an external control signal, a condenser of refrigerant, and an evaporator of refrigerant,
a suction pressure estimation or detection means arranged to estimate or detect a physical value with a correlation with the suction pressure of the compressor; the unit being characterised in that it comprises:

   an input signal calculation means arranged to calculate an input signal to a compressor with a correlation with a pressure difference between the discharge pressure and said suction pressure of said compressor; and
   a discharge pressure estimation means arranged to estimate said discharge pressure of said compressor by referring to said physical value with a correlation with said suction pressure of said compressor estimated or detected by said suction pressure estimation or detection means, and a displacement control signal as said input signal with a correlation with said pressure difference between said discharge pressure and said suction pressure of said compressor calculated by said input signal calculation means.

Namely, without providing a pressure detection sensor, the discharge pressure of the compressor is estimated from the physical value with a correlation with the suction pressure of the compressor and the input signal with a correlation with a pressure difference between the discharge pressure and the suction pressure.

In such refrigeration cycle control units according to the present invention, a structure may be employed wherein the control unit further comprises a compressor displacement control means for controlling a displacement of the variable displacement compressor, and a discharge pressure limit value calculation means for calculating an upper limit value of the discharge pressure of the compressor, and the discharge pressure of the compressor may be adjusted by controlling the displacement of the compressor by the compressor displacement control means, referring to the discharge pressure of the compressor estimated by the discharge pressure estimation means and the discharge pressure limit value of the compressor calculated by the discharge pressure limit value calculation means.

In such a structure, referring to the discharge pressure limit value of the compressor calculated by the discharge pressure limit value calculation means and the discharge pressure of the compressor estimated by the discharge pressure estimation means, immediately after or after a predetermined time expires after the estimated discharge pressure exceeds the discharge pressure limit value, the displacement of the compressor or the pressure difference between the discharge pressure and the suction pressure of the compressor may be controlled so as to be decreased by the compressor displacement control means. In this case, it is preferred that, when the discharge pressure of the compressor estimated by the discharge pressure estimation means decreases to a value of a predetermined value A, which is lower than the discharge pressure limit value, or less, the control for decreasing the displacement of the compressor or the pressure difference between the discharge pressure and the suction pressure of the compressor is cancelled, and control of the control unit is returned to a usual control.

Further, with respect to the above-described structure for calculating the discharge pressure limit value, a structure may be employed wherein the control unit further comprises a compressor stop means for interrupting a displacement control signal to the compressor or stopping drive of the compressor, and referring to the discharge pressure limit value of the compressor calculated by the discharge pressure limit value calculation means and the discharge pressure of the compressor estimated by the discharge pressure estimation means, immediately after or after a predetermined time expires after the estimated discharge pressure exceeds the discharge pressure limit value, the displacement control signal to the compressor is interrupted or the drive of the compressor is stopped by the compressor stop means. In this case, it is preferred that, when the discharge pressure of the compressor estimated by the discharge pressure estimation means decreases to a value of a predetermined value A, which is lower than the discharge pressure limit value, or less, the control for interrupting the displacement control signal to the compressor or stopping the drive of the compressor by the compressor stop means is cancelled, and control of the control unit is returned to a usual control.

Further, it may be employed that, to control the discharge pressure of the compressor estimated by the discharge pressure estimation means at a permissible discharge pressure 1 predetermined as a same level value as the discharge pressure limit value of the compressor calculated by the discharge pressure limit value calculation means or as a lower target discharge pressure, the discharge pressure of the compressor is controlled by controlling the displacement of the compressor comparing the permissible discharge pressure 1 and the estimated discharge pressure or referring to a deviation therebetween. In this case, it is preferred that the control unit further comprises a compressor stop means for interrupting a displacement control signal to the compressor or stopping drive of the compressor, and a discharge pressure detection means for detecting the discharge pressure of the compressor, and when a detected discharge pressure exceeds the discharge pressure limit value, the compressor stop means interrupts the displacement control signal or stops drive of the compressor.

Further, with respect to the above-described structure for calculating the discharge pressure limit value, a structure may be employed wherein the control unit further comprises a compressor rotational speed detection or estimation means for detecting or estimating a physical value having a correlation with a rotational speed of the compressor, and the discharge pressure limit value calculation means calculates the discharge pressure limit value by referring to the rotational speed of the compressor detected or estimated by the compressor rotational speed detection or estimation means.

Furthermore, a structure may be employed wherein the control unit further comprises a refrigeration cycle load detection means for detecting a thermal load of the refrigeration cycle, and the discharge pressure limit value calculation means calculates the discharge pressure limit value by referring to the thermal load of the refrigeration cycle detected by the refrigeration cycle load detection means in addition to the rotational speed of the compressor.

In a case of a refrigeration cycle provided in an air conditioning system for vehicles, the following thermal load of the refrigeration cycle can be employed. Namely, a structure may be employed wherein the refrigeration cycle is a refrigeration cycle provided in an air conditioning system for vehicles, and the refrigeration cycle load detection means detects the thermal load from any combination of an outside air temperature and a vehicle running speed, or a condensation temperature of refrigerant, or an outside air sensor.

Further, a structure may be employed wherein the control unit further comprises a blower sending air to the evaporator, and the suction pressure estimation means estimates a suction pressure by referring to an evaporator temperature and/or a physical value having a correlation with a refrigerant flow rate. In this case, the evaporator temperature may be a temperature of air immediately after passing through the evaporator, or a temperature of refrigerant near the evaporator, or a temperature at a position between fins of the evaporator, or a temperature at a surface of a refrigerant tube from an entrance of the evaporator to a suction port of the compressor. Namely, because refrigerant at the evaporator is in a two-phase condition of gas and liquid, a refrigerant pressure is determined univocally from a refrigerant temperature in the evaporator. Therefore, it is possible to estimate a refrigerant pressure in the evaporator by determining a refrigerant temperature by detecting the above-described evaporator temperature. Further, in an actual refrigeration cycle, there occurs a pressure reduction of refrigerant due to a pressure loss in a circuit from the evaporator to a compressor. Since this pressure loss becomes greater as a refrigerant flow rate increases, it is possible to estimate the pressure loss by detecting the refrigerant flow rate. Therefore, the refrigerant suction pressure of the compressor has a close correlation with the refrigerant temperature and the refrigerant flow rate in the evaporator, and by detecting or estimating these two values, it becomes possible to adequately estimate the refrigerant suction pressure.

More concretely, for example, the refrigerant suction pressure is estimated by using the following equation.

$$Ps' = a \cdot Gr + b \cdot Teva + c$$

Where, Ps': an estimated value of refrigerant suction pressure,

Gr : a refrigerant flow rate,

Teva: an air temperature at an evaporator exit, and

a, b, c: a constant determined by an examination.

In the refrigeration cycle control unit according to the present invention, it is possible to adequately estimate the discharge pressure of the compressor, and to properly protect the compressor by controlling the discharge pressure of the compressor at a preferable value or within a preferable range based on the estimated value. Further, because the discharge pressure is estimated, it is not necessary to detect a high-pressure side pressure of the refrigeration cycle by a sensor, etc., and the whole of the system may be simplified and a more inexpensive system may be made.

Further advantages of the present invention will be understood from the following detailed description of the preferred embodiments of the present invention with reference to the accompanying figures, of which:

Fig. 1 is a schematic diagram of an air conditioning system having a refrigeration cycle control unit according to an embodiment of the present invention.

Fig. 2 is a graph showing a relationship between a ΔPdPs signal and a pressure difference in a compressor of the unit depicted in Fig. 1.

Fig. 3 is a block diagram showing an example of control in the unit depicted in Fig. 1.

Fig. 4 is a flowchart showing an example of flow in the control depicted in Fig. 3.

Fig. 5 is a flowchart showing another example of flow in the control depicted in Fig. 3.

Fig. 6 is a flowchart showing a further example of flow in the control depicted in Fig. 3.

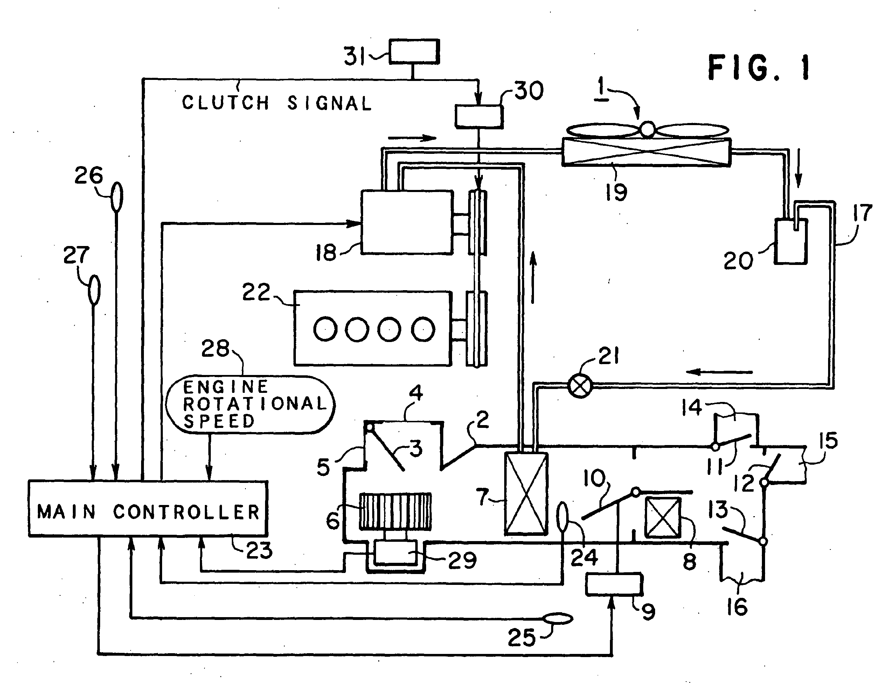

Fig. 1 depicts an air conditioning system for vehicles having a refrigeration cycle control unit according to an embodiment of the present invention. In Fig. 1, an air conditioning system for vehicles 1 has an air duct 2 opening toward a vehicle interior, and a blower 6 is provided at an upstream position in air duct 2. Blower 6 sends air sucked from outside air introduction port 4 and inside air introduction port which are adjusted by outside air/inside air switching damper 3. An evaporator 7 is provided as a cooler for cooling the sent air at a position downstream of blower 6, and at a position downstream thereof, a heater core as a heater 8 is provided. To heater 8, for example, engine cooling water is circulated. An air mixing damper 10, which is adjusted in opening degree by an air mixing damper actuator 9, is disposed at a position immediately upstream of heater 8. The temperature-controlled air is discharged through respective air discharge ports 14, 15 and 16 such as DEF, VENT and FOOT mode air discharge ports having respective dampers 11, 12 and 13.

In such an air conditioning system for vehicles 1, a refrigeration cycle 17 is provided. Refrigeration cycle 17 is structured as a refrigerant circuit connected via refrigerant tubes. In refrigeration cycle 17, a variable displacement compressor 18 the displacement of which is controlled by an external displacement control signal, a condenser 19 which condenses high-temperature and high-pressure refrigerant compressed by compressor 18, a receiver 20 which separates the condensed refrigerant into gas and liquid phases, an expansion valve 21 which reduces in pressure the refrigerant sent from receiver 20 and expand the refrigerant, evaporator 7 which evaporates the refrigerant sent from expansion valve 21 and cools air sent through air duct 2 by heat exchange with the air, are disposed in this order, and the refrigerant from evaporator 7 is sucked into compressor 18 and served to be compressed again. In this embodiment, compressor 18 is driven by an engine 22 for driving a vehicle via a clutch. On/off operation of this clutch is carried out via a clutch controller 30, and in this embodiment, a pressure switch 31 is provided in a clutch control signal circuit from a main controller 23.

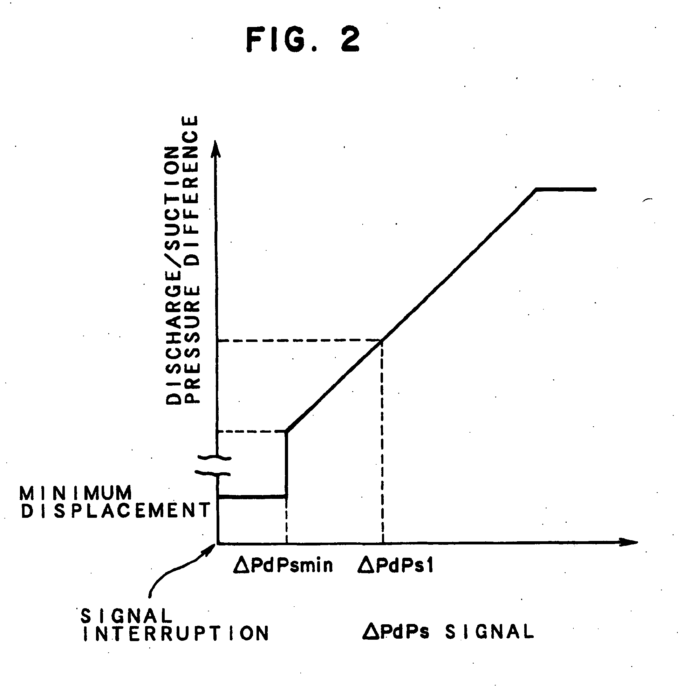

Main controller 23 is a controller for air conditioning, and a refrigeration cycle control unit according to the present invention is incorporated into main controller 23. The displacement control system of compressor 18 is different from a conventional compressor suction pressure control system, and it is a pressure difference control type-displacement control system controlling a pressure difference between a discharge pressure and a suction pressure of compressor 18, and an external displacement control signal ($\Delta$PdPs) is given from main controller 23 as an input signal having a correlation with the above-described pressure difference. Further, in this compressor, when the displacement control signal ($\Delta$PdPs) is set at a certain value ($\Delta$PdPsmin), the displacement is controlled at minimum. Fig. 2 shows an example of the relationship between the displacement control signal ($\Delta$PdPs) and the pressure difference between the discharge pressure and the suction pressure. In Fig. 2, $\Delta$PdPsmin and $\Delta$PdPs1 are displacement control signals for the following control.

$\Delta$PdPsmin: a displacement control signal controlling the compressor at a minimum displacement

$\Delta$PdPs1: a displacement control signal controlling the compressor at a certain pressure difference

Further, a clutch is provided for connecting/disconnecting the drive force transmission from a drive source for the compressor, and a clutch signal for controlling this connection/disconnection of the clutch is sent from main controller 23. Although the system in this embodiment has a clutch, the control according to the present invention can be applied to a system having no clutch.

Further, in this embodiment, an evaporator exit air temperature sensor 24 is provided at a position downstream of evaporator 7, and a signal of detected evaporator exit air temperature Teva is sent to main controller 23. Further, a detection signal of a vehicle interior temperature Tin from vehicle interior temperature sensor 25, a detection signal of an outside air temperature Tamb from outside air temperature sensor 26, and as needed, a detection signal of a sunshine amount from sunshine sensor 27, a signal 28 of an engine rotational speed Ne (or a compressor rotational speed) and a signal BLV of a voltage of a motor 29 for driving blower 6 (a blower voltage), are sent to main controller 23, respectively. From main controller 23, an opening degree control signal of air mixing damper 10 is sent to air mixing damper actuator 9, and a clutch control signal is sent to clutch controller 30.

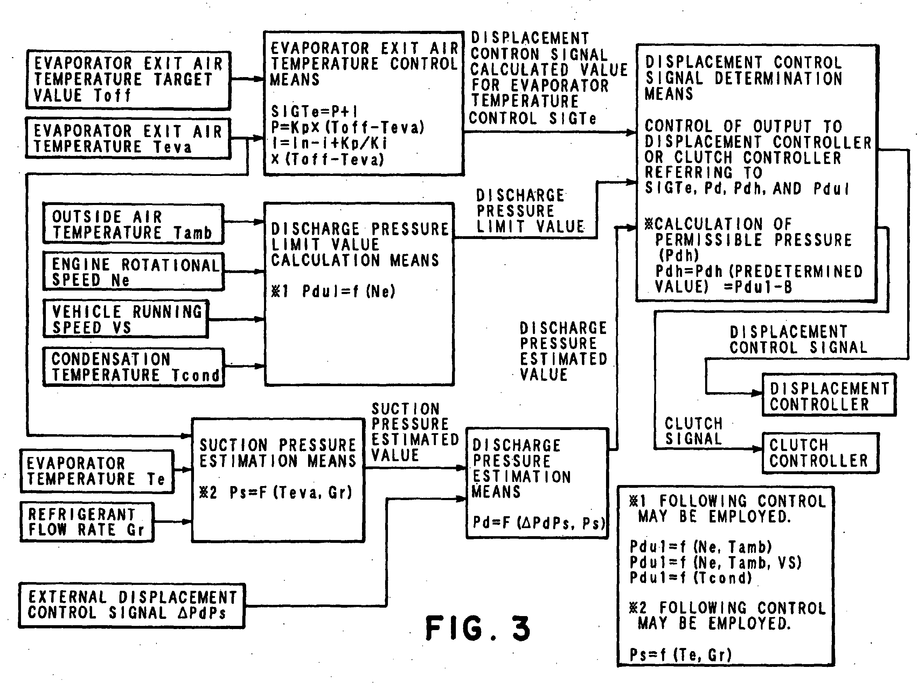

In this embodiment, the control is carried out as shown in Fig. 3.

A displacement control is carried out by setting the evaporator exit air temperature control as a usual control in this embodiment. Further, it is possible to avoid an inconvenience such as a trouble of the compressor due to an increase in high-pressure side pressure by performing the discharge pressure control of the refrigeration cycle.

First, a calculation value of displacement control signal for evaporator temperature control (SIGte) is calculated from signals of evaporator exit air temperature target value Toff and evaporator exit air temperature Teva by an evaporator exit air temperature control means. For example, the calculation is carried out by the following proportional integral calculation by using a deviation between evaporator exit air temperature target value Toff and evaporator exit air temperature Teva. In this embodiment, this control is set as a usual control.

$$\text{SIGte} = \text{P (proportional calculation)} + \text{I (integral calculation)}$$

Where, P and I are calculated as follows.

$$P = Kp \times (Toff - Teva)$$

$$I = Kp/Ki \times (Toff - Teva) + I_{n-1}$$

Kp: proportional calculation coefficient

Ki: integral time

$I_{n-1}$: calculated value at last time

Although the usual control is an ability control of an evaporator in this embodiment, except this, as usual controls there are an ability control of a condenser, a torque control of a compressor, etc.

Then, estimation or calculation of an input information used for discharge pressure control of a compressor is carried out, for example, as follows.

(1) Estimation of suction pressure (Ps):

The suction pressure of a compressor is estimated by using an evaporator temperature and a refrigerant flow rate as aforementioned.

$$Ps = f(Teva, Gr)$$

(in this embodiment)

$$Ps = f(Te, Gr)$$

(as another embodiment)
Where, Te: an evaporator temperature,
Teva: an evaporator exit air temperature, and
Gr: a refrigerant flow rate.
As the evaporator temperature Te, as aforementioned, a temperature of air immediately after passing through an evaporator (namely, the above-described evaporator exit air temperature Teva), or a temperature of refrigerant near the evaporator, or a temperature at a position between fins of the evaporator, or a temperature at a surface of a refrigerant tube from an entrance of the evaporator to a suction port of a compressor.

(2) Estimation of discharge pressure (Pd):

The discharge pressure of a compressor is estimated by using a compressor refrigerant suction pressure (Ps) and a pressure difference ($\Delta$PdPs) between the refrigerant suction pressure and a discharge pressure.

$$Pd = f(Ps, \Delta PdPs)$$

$\Delta$PdPs has a correlation with a displacement control signal of an external control signal type compressor, and the estimation can be carried out by the displacement control signal.

(3) Calculation of discharge pressure limit value (Pdu1):

The discharge pressure limit value is calculated by using an engine rotational speed (Ne) or a compressor rotational speed (Nc), an outside air temperature (Tamb), a vehicle speed (VS), a condensation temperature (Tcond), etc.

$$Pdu1 = f(Ne)$$

(in this embodiment)
As other examples,

$$Pdu1 = f(Ne, Tamb),$$

or,

$$Pdu1 = f(Ne, Tamb, VS),$$

or,

$$Pdu1 = f\,(Tcond).$$

(4) Calculation of permissible discharge pressure (Pdh):

The permissible discharge pressure of a compressor is calculated, for example, by subtracting a predetermined value (B) from the discharge pressure limit value (Pdu1).

$$Pdh = Pdu1 - B$$

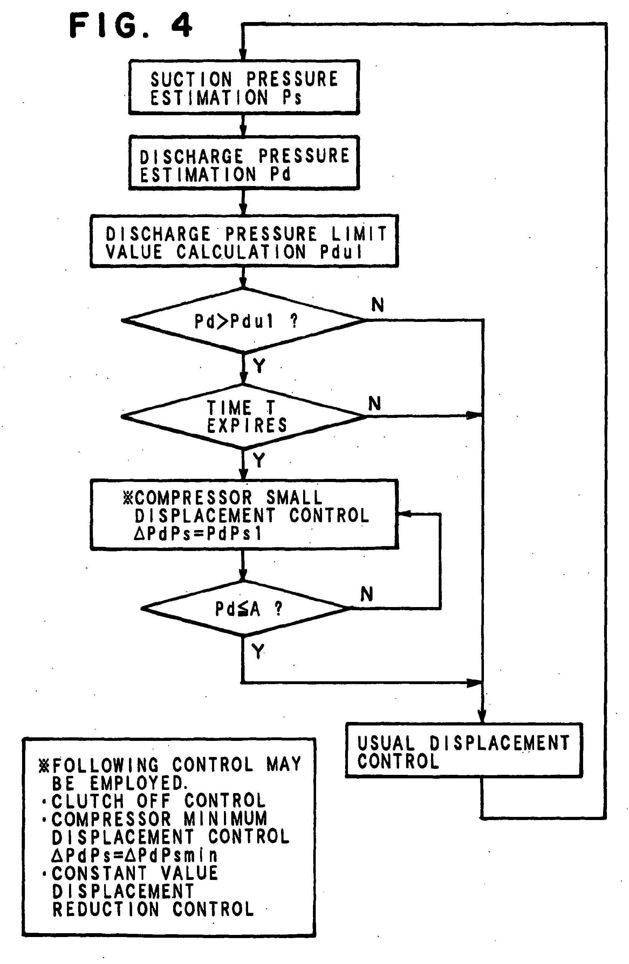

The control of compressor discharge pressure in the refrigeration cycle is carried out, for example, by the flows as shown in Figs. 4 to 6 based on the above-described estimated and calculated information.

In a discharge pressure restriction control No. 1 shown in Fig. 4, estimation of suction pressure, estimation of discharge pressure and calculation of discharge pressure limit value are carried out, and immediately after an estimated discharge pressure (Pd) exceeds a discharge pressure limit value (Pdu1), or after a predetermined time T expires, a compressor small displacement control ($\Delta PdPs= \Delta PdPs1$) is carried out. Further, it is determined by a displacement control signal determination means shown in Fig. 3 whether the estimated discharge pressure (Pd) becomes a predetermined value A, which is lower than the discharge pressure limit value, or less, and if it becomes the value or less, the compressor small displacement control is cancelled and the control is returned to a usual control. This compressor small displacement control is a control for achieving a predetermined pressure difference by controlling the compressor displacement control signal ($\Delta PdPs$) at $\Delta PdPs1$ based on Fig. 2. In this embodiment, although the compressor small displacement control is carried out immediately after the estimated discharge pressure (Pd) exceeds the discharge pressure limit value (Pdu1) or after the predetermined time T expires, instead of such a compressor small displacement control, the following controls may be employed as other examples.

- Clutch off control (a control for interrupting a connection with a drive source of a compressor)
- Compressor minimum displacement control (a control for controlling a displacement of a compressor at a minimum value by controlling a compressor displacement control signal ($\Delta PdPs$) at $\Delta PdPsmin$ based on Fig. 2)
- Constant value displacement reduction control (a control for reducing a compressor displacement control signal by a predetermined constant value)

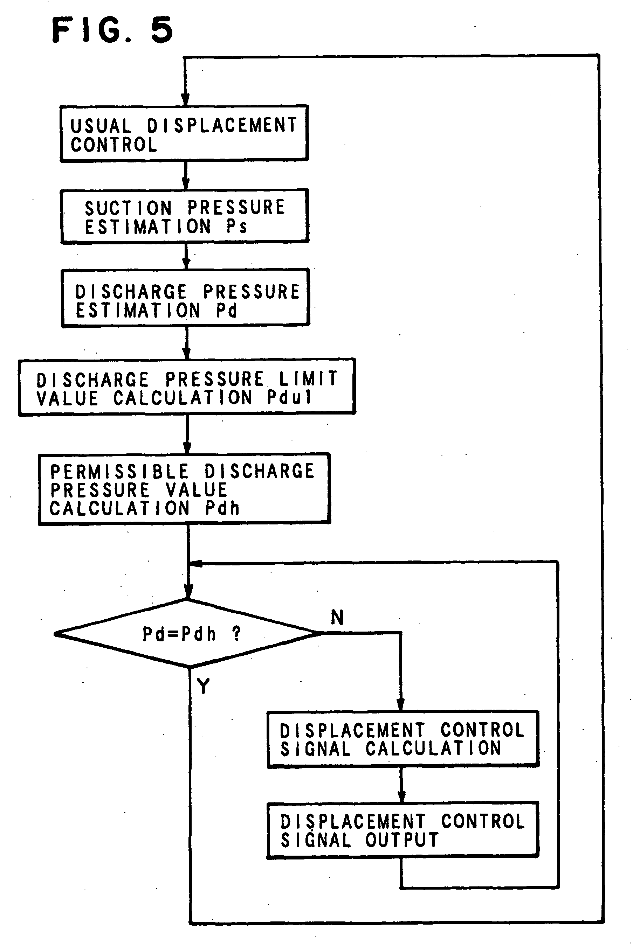

In a discharge pressure restriction control No. 2 shown in Fig. 5, estimation of suction pressure, estimation of discharge pressure, calculation of discharge pressure limit value and calculation of permissible discharge pressure are carried out, and referring to a deviation between the permissible discharge pressure (Pdh) and the estimated discharge pressure, the following integral calculation is carried out and a displacement control signal for controlling a discharge pressure (SIGp) is calculated, and the discharge pressure of the compressor is controlled by outputting the calculated displacement control signal. For example, in this embodiment, the displacement control signal for controlling a discharge pressure is calculated by the following equation.

$$(\text{displacement control signal calculation value}) =$$

$$(\text{last calculated value}) + Kp1/Ki1\,(Pdh - Pd)$$

Kpl : a proportional calculation coefficient 1
Ki1: an integral time 1

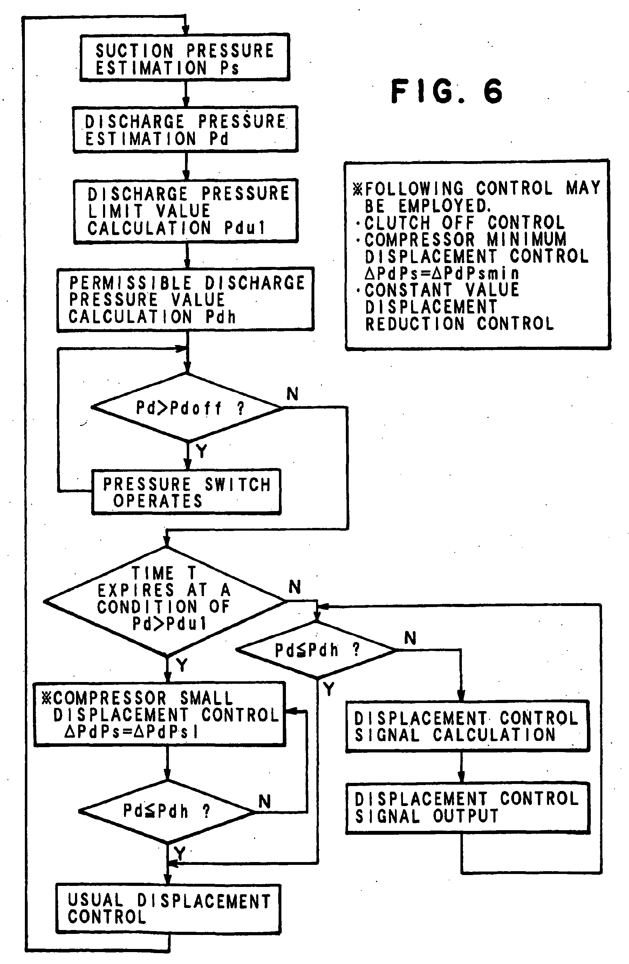

In a discharge pressure restriction control No. 3 shown in Fig. 6, estimation of suction pressure, estimation of discharge pressure, calculation of discharge pressure limit value and calculation of permissible discharge pressure are carried out, and when, for example, a pressure switch provided to a tube in a refrigerant circuit detects a predetermined discharge pressure (Pdoff), the connection between a compressor and a drive source thereof is interrupted. Further, when the pressure switch does not operate, referring to a deviation between the permissible discharge pressure (Pdh) and the estimated discharge pressure, proportional or/and integral calculation is carried out, a displacement control signal for controlling a discharge pressure is calculated, and the discharge pressure of the compressor is controlled by outputting the calculated displacement control signal. Further, a compressor small displacement control (control of ΔPdPs = ΔPdPs1) is carried out immediately after the estimated discharge pressure (Pd) exceeds the discharge pressure limit value (Pdu1) or a predetermined time expires. Moreover, it is determined by the displacement control signal determination means shown in Fig. 3 whether the estimated discharge pressure (Pd) becomes the permissible discharge pressure (Pdh), which is lower than the discharge pressure limit value, or less, and if it becomes the value or less, the compressor small displacement control is cancelled and the control is returned to a usual control. Where, if a pressure switch is provided for displacement control signal, by detecting the operation of the pressure switch, the displacement control signal can be interrupted. Further, this compressor small displacement control is a control for achieving a predetermined pressure difference by controlling the compressor displacement control signal (ΔPdPs) at ΔPdPs1 based on Fig. 2. Also in this embodiment, although the compressor small displacement control is carried out immediately after the estimated discharge pressure (Pd) exceeds the discharge pressure limit value (Pdu1) or after the predetermined time T expires, instead of such a compressor small displacement control, the following controls may be employed as other examples.

- Clutch off control (a control for interrupting a connection with a drive source of a compressor)
- Compressor minimum displacement control (a control for controlling a displacement of a compressor at a minimum value by controlling a compressor displacement control signal (ΔPdPs) at ΔPdPsmin based on Fig. 2)
- Constant value displacement reduction control (a control for reducing a compressor displacement control signal by a predetermined constant value)

In the above-described controls, it is possible to adequately control a discharge pressure of a compressor, thereby properly protecting the compressor so that a trouble does not occur.

**Claims**

1. A refrigeration cycle control unit, being for a refrigeration cycle having a compressor (18), which is a variable displacement compressor a displacement of which is controlled by an external control signal (ΔPdPs), a condenser (19) of refrigerant, and an evaporator (7) of refrigerant,
   a suction pressure estimation or detection means arranged to estimate or detect a physical value with a correlation with a suction pressure (Ps) of the compressor; the unit being **characterised in that** it comprises:

   a pressure difference estimation or detection means arranged to estimate or detect a physical value with a correlation with a pressure difference between a discharge pressure (Pd) and said suction pressure of said compressor; and
   a discharge pressure estimation means arranged to estimate said discharge pressure of said compressor by referring to said physical value with a correlation with said suction pressure of said compressor estimated or detected by said suction pressure estimation or detection means, and said physical value with a correlation with a pressure difference between said discharge pressure and said suction pressure of said compressor estimated or detected by said pressure difference estimation or detection means.

2. The refrigeration cycle control unit according to claim 1, wherein said control unit further comprises a compressor displacement control means arranged to control a displacement of said variable displacement compressor, and a discharge pressure limit value calculation means arranged to calculate an upper limit value (Pdu1) of said discharge pressure (Pd) of said compressor (18), and said discharge pressure of said compressor is adjusted by controlling said displacement of said compressor by said compressor displacement control means, referring to said discharge pressure of said compressor estimated by said discharge pressure estimation means and said discharge pressure limit value of said compressor calculated by said discharge pressure limit value calculation means.

3. The refrigeration cycle control unit according to claim 2, wherein, referring to said discharge pressure limit value of said compressor (18) calculated by said discharge pressure limit value calculation means and said discharge pressure (Pd) of said compressor estimated by said discharge pressure estimation means, immediately after or after a predetermined time expires after said estimated discharge pressure exceeds said discharge pressure limit value (Pdu1), said displacement of said compressor or said pressure difference between said discharge pressure (Pd) and said suction pressure (Ps) of said compressor is controlled so as to be decreased by said compressor displacement control means.

4. The refrigeration cycle control unit according to claim 3, wherein, when said discharge pressure (Pd) of said compressor (18) estimated by said discharge pressure estimation means decreases to a value of a predetermined value A, which is lower than said discharge pressure limit value (Pdu1), or less, said control for decreasing said displacement of said compressor or said pressure difference between said discharge pressure and said suction pressure of said compressor is cancelled, and control of said control unit is returned to a usual control.

5. The refrigeration cycle control unit according to claim 2, wherein said control unit further comprises a compressor stop means for interrupting a displacement control signal to said compressor (18) or stopping drive of said compressor, and referring to said discharge pressure limit value (PdU1) of said compressor calculated by said discharge pressure limit value calculation means and said discharge pressure of said compressor estimated by said discharge pressure estimation means, immediately after or after a predetermined time expires after said estimated discharge pressure exceeds said discharge pressure limit value, said displacement control signal ($\Delta$PdPs) to said compressor is interrupted or said drive of said compressor is stopped by said compressor stop means.

6. The refrigeration cycle control unit according to claim 5, wherein, when said discharge pressure (Pd) of said compressor (18) estimated by said discharge pressure estimation means decreases to a value of a predetermined value A, which is lower than said discharge pressure limit value (PdU1), or less, said control for interrupting said displacement control signal to said compressor or stopping said drive of said compressor by said compressor stop means is cancelled, and control of said control unit is returned to a usual control.

7. The refrigeration cycle control unit according to claim 2, wherein, to control said discharge pressure (Pd) of said compressor (18) estimated by said discharge pressure estimation means at a permissible discharge pressure predetermined as a same level value as said discharge pressure limit value (PdU1) of said compressor calculated by said discharge pressure limit value calculation means or as a lower target discharge pressure, said discharge pressure of said compressor is controlled by controlling said displacement of said compressor comparing said permissible discharge pressure and said estimated discharge pressure or referring to a deviation therebetween.

8. The refrigeration cycle control unit according to claim 7, wherein said control unit further comprises a compressor stop means for interrupting a displacement control signal to said compressor (18) or stopping drive of said compressor, and a discharge pressure detection means for detecting said discharge pressure (Pd) of said compressor, and when a detected discharge pressure exceeds said discharge pressure limit value (PdU1), said compressor stop means interrupts said displacement control signal ($\Delta$PdPs) or stops drive of said compressor.

9. The refrigeration cycle control unit according to any of claims 2 to 8, wherein said control unit further comprises a compressor rotational speed detection or estimation means for detecting or estimating a physical value having a correlation with a rotational speed (Ne) of said compressor (18), and said discharge pressure limit value calculation means calculates said discharge pressure limit value (PdU1) by referring to said rotational speed of said compressor detected or estimated by said compressor rotational speed detection or estimation means.

10. The refrigeration cycle control unit according to claim 9, wherein said control unit further comprises a refrigeration cycle load detection means for detecting a thermal load of said refrigeration cycle, and said discharge pressure limit value calculation means calculates said discharge pressure limit value by referring to said thermal load of said refrigeration cycle detected by said refrigeration cycle load detection means in addition to said rotational speed (Ne) of said compressor (18).

11. The refrigeration cycle control unit according to claim 10, wherein said refrigeration cycle is a refrigeration cycle provided in an air conditioning system for vehicles, and said refrigeration cycle load detection means detects said thermal load from any combination of an outside air temperature (Tamb) and a vehicle running speed, or a condensation temperature (Tcond) of refrigerant, or an outside air sensor (26).

12. The refrigeration cycle control unit according to any of claims 1 to 11, wherein said control unit further comprises a blower (26) sending air to said evaporator (7), and said suction pressure estimation means estimates a suction pressure (Ps) by referring to an evaporator temperature (Teva) and/or a physical value having a correlation with a refrigerant flow rate (Gr).

13. The refrigeration cycle control unit according to claim 12, wherein said evaporator temperature (Teva) is a temperature of air immediately after passing through said evaporator (7), or a temperature of refrigerant near said evaporator, or a temperature at a position between fins of said evaporator, or a temperature at a surface of a refrigerant tube from an entrance of said evaporator to a suction port of said compressor.

**14.** A refrigeration cycle control unit, being for a refrigeration cycle having a compressor (18), which is a variable displacement compressor a displacement of which is controlled by controlling a pressure difference between a discharge pressure (Pd) of said compressor and a suction pressure (Ps) of said compressor by an external control signal (ΔPdPs), a condenser (19) of refrigerant, and an evaporator (7) of refrigerant,

a suction pressure estimation or detection means arranged to estimate or detect a physical value with a correlation with the suction pressure of the compressor;

the unit being **characterised in that** it comprises:

an input signal calculation means arranged to calculate an input signal to the compressor with a correlation with a pressure difference between the discharge pressure and said suction pressure of said compressor; and

a discharge pressure estimation means arranged to estimate said discharge pressure of said compressor by referring to said physical value with a correlation with said suction pressure of said compressor estimated or detected by said suction pressure estimation or detection means, and a displacement control signal as said input signal with a correlation with said pressure difference between said discharge pressure and said suction pressure of said compressor calculated by said input signal calculation means.

**15.** The refrigeration cycle control unit according to claim 14, wherein said control unit further comprises a compressor displacement control means arranged to control a displacement of said variable displacement compressor (18), and a discharge pressure limit value calculation means arranged to calculate an upper limit value (PdU1) of said discharge pressure of said compressor, and said discharge pressure (Pd) of said compressor is adjusted by controlling said displacement of said compressor by said compressor displacement control means, referring to said discharge pressure of said compressor estimated by said discharge pressure estimation means and said discharge pressure limit value of said compressor calculated by said discharge pressure limit value calculation means.

**16.** The refrigeration cycle control unit according to claim 15, wherein, referring to said discharge pressure limit value (PdU1) of said compressor (18) calculated by said discharge pressure limit value calculation means and said discharge pressure (Pd) of said compressor estimated by said discharge pressure estimation means, immediately after or after a predetermined time expires after said estimated discharge pressure exceeds said discharge pressure limit value, said displacement of said compressor or said pressure difference between said discharge pressure and said suction pressure (Ps) of said compressor is controlled so as to be decreased by said compressor displacement control means.

**17.** The refrigeration cycle control unit according to claim 16, wherein, when said discharge pressure (Pd) of said compressor (18) estimated by said discharge pressure estimation means decreases to a value of a predetermined value A, which is lower than said discharge pressure limit value (PdU1), or less, said control for decreasing said displacement of said compressor or said pressure difference between said discharge pressure and said suction pressure (Ps) of said compressor is cancelled, and control of said control unit is returned to a usual control.

**18.** The refrigeration cycle control unit according to claim 15, wherein said control unit further comprises a compressor stop means for interrupting a displacement control signal (ΔPdPs) to said compressor (18) or stopping drive of said compressor, and referring to said discharge pressure limit value (PdU1) of said compressor calculated by said discharge pressure limit value calculation means and said discharge pressure (Pd) of said compressor estimated by said discharge pressure estimation means, immediately after or after a predetermined time expires after said estimated discharge pressure exceeds said discharge pressure limit value, said displacement control signal to said compressor is interrupted or said drive of said compressor is stopped by said compressor stop means.

**19.** The refrigeration cycle control unit according to claim 18, wherein, when said discharge pressure (Pd) of said compressor (18) estimated by said discharge pressure estimation means decreases to a value of a predetermined value A, which is lower than said discharge pressure limit value, or less, said control for interrupting said displacement control signal (ΔPdPs) to said compressor or stopping said drive of said compressor by said compressor stop means is cancelled, and control of said control unit is returned to a usual control.

**20.** The refrigeration cycle control unit according to claim 15, wherein, to control said discharge pressure (Pd) of said compressor (18) estimated by said discharge pressure estimation means at a permissible discharge pressure predetermined as a same level value as said discharge pressure limit value (Pdu1) of said compressor calculated by said discharge pressure limit value calculation means or as a lower target discharge pressure, said discharge pressure of said compressor is controlled by controlling said displacement of said compressor comparing said permissible discharge pressure and said estimated discharge pressure or referring to a deviation therebetween.

21. The refrigeration cycle control unit according to claim 20, wherein said control unit further comprises a compressor stop means for interrupting a displacement control signal to said compressor (18) or stopping drive of said compressor, and a discharge pressure detection means for detecting said discharge pressure (Pd) of said compressor, and when a detected discharge pressure exceeds said discharge pressure limit value (PdU1), said compressor stop means interrupts said displacement control signal or stops drive of said compressor.

22. The refrigeration cycle control unit according to any of claims 15 to 21, wherein said control unit further comprises a compressor rotational speed detection or estimation means for detecting or estimating a physical value having a correlation with a rotational speed (Ne) of said compressor, and said discharge pressure limit value calculation means calculates said discharge pressure limit value (PdU1) by referring to said rotational speed of said compressor detected or estimated by said compressor rotational speed detection or estimation means.

23. The refrigeration cycle control unit according to claim 22, wherein said control unit further comprises a refrigeration cycle load detection means for detecting a thermal load of said refrigeration cycle, and said discharge pressure limit value calculation means calculates said discharge pressure limit value (PdU1) by referring to said thermal load of said refrigeration cycle detected by said refrigeration cycle load detection means in addition to said rotational speed (Ne) of said compressor (18).

24. The refrigeration cycle control unit according to claim 23, wherein said refrigeration cycle is a refrigeration cycle provided in an air conditioning system for vehicles, and said refrigeration cycle load detection means detects said thermal load from any combination of an outside air temperature (Tamb) and a vehicle running speed (Ne), or a condensation temperature (Tcond) of refrigerant, or an outside air sensor (26).

25. The refrigeration cycle control unit according to any of claims 14 to 24, wherein said control unit further comprises a blower (6) sending air to said evaporator (7), and said suction pressure estimation means estimates a suction pressure (Ps) by referring to an evaporator temperature (Teva) and/or a physical value having a correlation with a refrigerant flow rate (Gr).

26. The refrigeration cycle control unit according to claim 25, wherein said evaporator temperature (Teva) is a temperature of air immediately after passing through said evaporator, or a temperature of refrigerant near said evaporator, or a temperature at a position between fins of said evaporator, or a temperature at a surface of a refrigerant tube from an entrance of said evaporator to a suction port of said compressor.

**Patentansprüche**

1. Eine Kühlkreislaufsteuereinheit für einen Kühlkreislauf, der einen Kompressor (18), der ein verstellbarer Kompressor ist, dessen Verdrängung durch ein externes Steuersignal (ΔPdPs) gesteuert wird, einen Kondensator (19) des Kältemittels und einen Verdampfer (7) des Kältemittels,
ein Ansaugdruckabschätz- oder -erfassungsmittel, das angeordnet ist, um einen physikalischen Wert mit einer Korrelation zu einem Ansaugdruck (Ps) des Kompressors abzuschätzen oder zu erfassen, aufweist;
wobei die Einheit **dadurch gekennzeichnet ist, daß** sie aufweist:

ein Druckdifferenzabschätz- oder -erfassungsmittel, das angeordnet ist, um einen physikalischen Wert mit einer Korrelation zu einer Druckdifferenz zwischen einem Ausstoßdruck (Pd) und dem Ansaugdruck des Kompressors abzuschätzen oder zu erfassen; und
ein Ausstoßdruckabschätzmittel, das angeordnet ist, um den Ausstoßdruck des Kompressors unter Bezugnahme auf den physikalischen Wert mit einer Korrelation zu dem Ansaugdruck des Kompressors, der durch das Ansaugdruckabschätz- oder - erfassungsmittel abgeschätzt oder erfaßt wird, und auf den physikalischen Wert mit einer Korrelation zu einer Druckdifferenz zwischen dem Ausstoßdruck und dem Ansaugdruck des Kompressors, der durch das Druckunterschiedabschätz- oder - erfassungsmittel abgeschätzt oder erfaßt wird, abzuschätzen.

2. Die Kühlkreislaufsteuereinheit gemäß Anspruch 1, wobei die Steuereinheit ferner ein Kompressorverdrängungssteuermittel, das angeordnet ist, um eine Verdrängung des verstellbaren Kompressors zu steuern, und ein Ausstoßdruckgrenzwertberechnungsmittel, das angeordnet ist, um einen oberen Grenzwert (Pdu1) des Ausstoßdrucks (Pd) des Kompressors (18) zu berechnen, aufweist, und der Ausstoßdruck des Kompressors durch Steuerung der Verdrängung des Kompressors durch das Kompressorverdrängungssteuermittel unter Bezugnahme auf den Ausstoßdruck des Kompressors, der durch das Ausstoßdruckabschätzmittel abgeschätzt wird, und auf den Ausstoßdruckgrenzwert des Kompressors, der durch das Ausstoßdruckgrenzwertberechnungsmittel berechnet wird, angepasst wird.

3. Die Kühlkreislaufsteuereinheit gemäß Anspruch 2, wobei unter Bezugnahme auf den Ausstoßdruckgrenzwert des Kompressors (18), der durch das Ausstoßdruckgrenzwertberechnungsmittel berechnet wird, und auf den Ausstoßdruck (Pd) des Kompressors, der durch das Ausstoßdruckabschätzmittel abgeschätzt wird, unmittelbar nachdem der abgeschätzte Ausstoßdruck den Ausstoßdruckgrenzwert (Pdu1) überschritten hat oder nachdem danach eine vorbestimmte Zeit verstrichen ist, die Verdrängung des Kompressors oder die Druckdifferenz zwischen dem Ausstoßdruck (Pd) und dem Ansaugdruck (Ps) des Kompressors durch das Kompressorverdrängungssteuermittel so gesteuert werden, daß sie verringert werden.

4. Die Kühlkreislaufsteuereinheit gemäß Anspruch 3, wobei dann wenn sich der Ausstoßdruck (Pd) des Kompressors (18), der durch das Ausstoßdruckabschätzmittel abgeschätzt wird, auf oder unter einen Wert eines vorbestimmten Wertes A verringert, der niedriger als der Ausstoßdruckgrenzwert (Pdu1) ist, die Steuerung zur Verringerung der Verdrängung des Kompressors oder der Druckdifferenz zwischen dem Ausstoßdruck und dem Ansaugdruck des Kompressors abgebrochen wird, und die Steuerung der Steuereinheit zu einer gewöhnlichen Steuerung zurückkehrt.

5. Die Kühlkreislaufsteuereinheit gemäß Anspruch 2, wobei die Steuereinheit ferner ein Kompressorstopmittel zur Unterbrechung eines Verdrängungssteuerungssignals an den Kompressor (18) oder zur Beendigung des Antriebs des Kompressors aufweist, und unter Bezugnahme auf den Ausstoßdruckgrenzwert (PdU1) des Kompressors, der durch das Ausstoßdruckgrenzwertberechnungsmittel berechnet wird, und auf den Ausstoßdruck des Kompressors, der durch das Ausstoßdruckabschätzmittel abgeschätzt wird, unmittelbar nachdem der abgeschätzte Ausstoßdruck den Ausstoßdruckgrenzwert überschritten hat oder nachdem danach eine vorbestimmte Zeit verstrichen ist, durch das Kompressorstopmittel das Verdrängungssteuerungssignal (ΔPdPs) an den Kompressor unterbrochen wird oder der Antrieb des Kompressors beendet wird.

6. Die Kühlkreislaufsteuereinheit gemäß Anspruch 5, wobei dann, wenn sich der Ausstoßdruck (Pd) des Kompressors (18), der durch das Ausstoßdruckabschätzmittel abgeschätzt wird, auf oder unter einen Wert eines vorbestimmten Wertes A verringert, der niedriger als der Ausstoßdruckgrenzwert (PdU1) ist, die Steuerung zur Unterbrechung des Verdrängungssteuerungssignal an den Kompressor oder zur Beendigung des Antriebs des Kompressors durch das Kompressorstopmittel abgebrochen wird, und die Steuerung der Steuereinheit zu einer gewöhnlichen Steuerung zurückkehrt.

7. Die Kühlkreislaufsteuereinheit gemäß Anspruch 2, wobei zur Steuerung des Ausstoßdrucks (Pd) des Kompressors (18), der durch das Ausstoßdruckabschätzmittel abgeschätzt wird, bei einem zulässigen Ausstoßdruck, der als ein Wert auf gleicher Ebene wie der Ausstoßdruckgrenzwert (PdU1) des Kompressors, der durch das Ausstoßdruckgrenzwertberechnungsmittel berechnet wird, oder als ein niedrigerer Zielausstoßdruck vorbestimmt ist, der Ausstoßdruck des Kompressors durch Steuerung der Verdrängung des Kompressors gesteuert wird, wobei der zulässige Ausstoßdruck und der abgeschätzte Ausstoßdruck verglichen werden, oder auf eine Abweichung dazwischen Bezug genommen wird.

8. Die Kühlkreislaufsteuereinheit gemäß Anspruch 7, wobei die Steuereinheit ferner ein Kompressorstopmittel zur Unterbrechung eines Verdrängungssteuerungssignals an den Kompressor (18) oder zur Beendigung des Antriebs des Kompressors und ein Ausstoßdruckerfassungsmittel zur Erfassung des Ausstoßdrucks (Pd) des Kompressors aufweist, und dann, wenn ein erfaßter Ausstoßdruck den Ausstoßdruckgrenzwert (PdU1) überschreitet, das Kompressorstopmittel das Verdrängungssteuerungssignal (ΔPdPs) unterbricht oder den Antrieb des Kompressors beendet.

9. Die Kühlkreislaufsteuereinheit gemäß einem der Ansprüche 2 bis 8, wobei die Steuereinheit ferner ein Kompressordrehzahlerfassungs- oder abschätzmittel zur Erfassung oder Abschätzung eines physikalischen Werts, der eine Korrelation zu einer Drehzahl (Ne) des Kompressors (18) hat, aufweist, und das Ausstoßdruckgrenzwertberechnungsmittel den Ausstoßdruckgrenzwert (PdU1) unter Bezugnahme auf die Drehzahl des Kompressors, die durch das Kompressordrehzahlerfassung- oder abschätzmittel erfaßt oder abgeschätzt wird, berechnet.

10. Die Kühlkreislaufsteuereinheit gemäß Anspruch 9, wobei die Steuereinheit ferner ein Kühlkreislauflasterfassungsmittel zur Erfassung einer thermischen Last des Kühlkreislaufs aufweist und das Ausstoßdruckgrenzwertberechnungsmittel den Ausstoßdruckgrenzwert unter Bezugnahme auf die thermische Last des Kühlkreislaufs, die durch das Kühlkreislauflasterfassungsmittel erfaßt wird, zusätzlich zu der Drehzahl (Ne) des Kompressors (18), berechnet.

11. Die Kühlkreislaufsteuereinheit gemäß Anspruch 10, wobei der Kühlkreislauf ein Kühlkreislauf ist, der in einem Klimaanlagensystem für Fahrzeuge vorgesehen ist, und das Kühlkreislauflasterfassungsmittel die thermische Last aus jeder Kombination aus einer Außenlufttemperatur (Tamb) und einer Fahrzeugfahrgeschwindigkeit oder einer Kondensationstemperatur (Tcond) des Kältemittels oder eines Außenluftsensors (26) erfaßt.

12. Die Kühlkreislaufsteuereinheit gemäß einem der Ansprüche 1 bis 11, wobei die Steuereinheit ferner ein Gebläse (26) aufweist, das Luft zu dem Verdampfer (7) sendet, und das Ansaugdruckabschätzmittel einen Ansaugdruck (Ps) unter Bezugnahme auf eine Verdampfertemperatur (Teva) und/oder auf einen physikalischen Wert, der eine Korrelation zu einer Kältemittelflußrate (Gr) hat, abschätzt.

13. Die Kühlkreislaufsteuereinheit gemäß Anspruch 12, wobei die Verdampfertemperatur (Teva) eine Lufttemperatur unmittelbar nach dem Durchgang durch den Verdampfer (7) oder eine Kältemitteltemperatur nahe des Verdampfers oder eine Temperatur an einer Position zwischen Rippen des Verdampfers oder eine Temperatur auf einer Oberfläche eines Kältemittelrohrs von einem Eingang des Verdampfers zu einer Ansaugöffnung des Kompressors ist.

14. Eine Kühlkreislaufsteuereinheit für einen Kühlkreislauf, der einen Kompressor (18), der ein verstellbarer Kompressor ist, dessen Verdrängung durch Steuerung einer Druckdifferenz zwischen einem Ausstoßdruck (Pd) des Kompressors und einem Ansaugdruck (Ps) des Kompressors durch ein externes Steuersignal (ΔPdPs) gesteuert wird, einen Kondensator (19) des Kältemittels und einen Verdampfer (7) des Kältemittels,
ein Ansaugdruckabschätz- oder -erfassungsmittel, das angeordnet ist, um einen physikalischen Wert mit einer Korrelation zu dem Ansaugdruck des Kompressors abzuschätzen oder zu erfassen, aufweist;
wobei die Einheit **dadurch gekennzeichnet ist, daß** sie aufweist:

ein Eingabesignalberechnungsmittel, das angeordnet ist, um ein Eingabesignal an den Kompressor mit einer Korrelation zu einer Druckdifferenz zwischen dem Ausstoßdruck und dem Ansaugdruck des Kompressors zu berechnen; und
ein Ausstoßdruckabschätzmittel, das angeordnet ist, um den Ausstoßdruck des Kompressors unter Bezugnahme auf den physikalischen Wert mit einer Korrelation zu dem Ansaugdruck des Kompressors, der durch das Ansaugdruckabschätz- oder - erfassungsmittel abgeschätzt oder erfaßt wird, und auf ein Verdrängungssteuersignal als Eingabesignal mit einer Korrelation zu der Druckdifferenz zwischen dem Ausstoßdruck und dem Ansaugdruck des Kompressors, der durch das Eingabesignalberechnungsmittel berechnet wird, abzuschätzen.

15. Die Kühlkreislaufsteuereinheit gemäß Anspruch 14, wobei die Steuereinheit ferner ein Kompressorverdrängungssteuermittel, das angeordnet ist, um eine Verdrängung des verstellbaren Kompressors (18) zu steuern, und ein Ausstoßdruckgrenzwertberechnungsmittel, das angeordnet ist, um einen oberen Grenzwert (PdU1) des Ausstoßdrucks des Kompressors zu berechnen, aufweist, und der Ausstoßdruck (Pd) des Kompressors durch Steuerung der Verdrängung des Kompressors durch das Kompressorverdrängungssteuerungsmittel unter Bezugnahme auf den Ausstoßdruck des Kompressors, der durch das Ausstoßdruckabschätzmittel abgeschätzt wird, und auf den Ausstoßdruckgrenzwert des Kompressors, der durch das Ausstoßdruckgrenzwertberechnungsmittel berechnet wird, angepaßt wird.

16. Die Kühlkreislaufsteuereinheit gemäß Anspruch 15, wobei unter Bezugnahme auf den Ausstoßdruckgrenzwert (PdU1) des Kompressors (18), der durch das Ausstoßdruckgrenzwertberechnungsmittel berechnet wird, und auf den Ausstoßdruck (Pd) des Kompressors, der durch das Ausstoßdruckabschätzmittel abgeschätzt wird, unmittelbar nachdem der abgeschätzte Ausstoßdruck den Ausstoßdruckgrenzwert überschritten hat oder nachdem danach eine vorbestimmte Zeit verstrichen ist, die Verdrängung des Kompressors oder die Druckdifferenz zwischen dem Ausstoßdruck und dem Ansaugdruck (Ps) des Kompressors durch die Kompressorverdrängungssteuereinheit so gesteuert werden, daß sie verringert werden.

17. Die Kühlkreislaufsteuereinheit gemäß Anspruch 16, wobei dann wenn sich der Ausstoßdruck (Pd) des Kompressors (18), der durch das Ausstoßdruckabschätzmittel abgeschätzt wird, auf oder unter einen Wert eines vorbestimmten Wertes A verringert, der niedriger als der Ausstoßdruckgrenzwert (PdU1) ist, die Steuerung zur Verringerung der Verdrängung des Kompressors oder der Druckdifferenz zwischen dem Ausstoßdruck und dem Ansaugdruck (Ps) des Kompressors abgebrochen wird und die Steuerung der Steuereinheit zu einer gewöhnlichen Steuerung zurückkehrt.

18. Die Kühlkreislaufsteuereinheit gemäß Anspruch 15, wobei die Steuereinheit ferner ein Kompressorstopmittel zur Unterbrechung eines Verdrängungssteuersignals (ΔPdPs) an den Kompressor (18) oder zur Beendigung eines Antriebs des Kompressors aufweist, und unter Bezugnahme auf den Ausstoßdruckgrenzwert (PdU1) des Kompressors, der durch das Ausstoßdruckgrenzwertberechnungsmittel berechnet wird, und auf den Ausstoßdruck (Pd) des Kompressors, der durch das Ausstoßdruckabschätzmittel abgeschätzt wird, unmittelbar nachdem der abgeschätzte Ausstoßdruck den Ausstoßdruckgrenzwert überschritten hat oder nachdem danach eine vorbestimmte Zeit verstrichen ist, durch das Kompressorstopmittel das Verdrängungssteuersignal an den Kompressor unterbrochen wird oder der Antrieb des Kompressors beendet wird.

19. Die Kühlkreislaufsteuereinheit gemäß Anspruch 18, wobei dann, wenn sich der Ausstoßdruck (Pd) des Kompressors (18), der durch das Ausstoßdruckabschätzmittel abgeschätzt wird, auf oder unter einen Wert eines vorbestimmten Wertes A verringert, der niedriger als der Ausstoßdruckgrenzwert ist, die Steuerung zur Unterbrechung des Verdrängungssteuersignals (ΔPdPs) an den Kompressor oder zur Beendigung des Antriebs des Kompressors durch das Kompressorstopmittel abgebrochen wird, und die Steuerung der Steuereinheit zu einer gewöhnlichen Steuerung zurückkehrt.

20. Die Kühlkreislaufsteuereinheit gemäß Anspruch 15, wobei zur Steuerung des Ausstoßdrucks (Pd) des Kompressors (18), der durch das Ausstoßdruckabschätzmittel abgeschätzt wird, bei einem zulässigen Ausstoßdruck, der als ein Wert gleicher Ebene wie der Ausstoßdruckgrenzwert (Pdu1) des Kompressors, der durch das Ausstoßdruckgrenzwertberechnungsmittel berechnet wird, oder als ein niedrigerer Zielausstoßdruck vorbestimmt ist, der Ausstoßdruck des Kompressors durch Steuerung der Verdrängung des Kompressors gesteuert wird, wobei der zulässige Ausstoßdruck und der geschätzte Ausstoßdruck verglichen werden oder auf eine Abweichung dazwischen Bezug genommen wird.

21. Die Kühlkreislaufsteuereinheit gemäß Anspruch 20, wobei die Steuereinheit ferner ein Kompressorstopmittel zur Unterbrechung eines Verdrängungssteuerungssignals an den Kompressor (18) oder zur Beendigung des Antriebs des Kompressors und ein Ausstoßdruckerfassungsmittel zur Erfassung des Ausstoßdrucks (Pd) des Kompressors aufweist, und dann, wenn ein erfaßter Ausstoßdruck den Ausstoßdruckgrenzwert (PdU1) überschreitet, das Kompressorstopmittel das Verdrängungssteuersignal unterbricht oder den Antrieb des Kompressors beendet.

22. Die Kühlkreislaufsteuereinheit gemäß einem der Ansprüche 15 bis 21, wobei die Steuereinheit ferner ein Kompressordrehzahlerfassung- oder abschätzmittel zur Erfassung oder Abschätzung eines physikalischen Werts, der eine Korrelation zu einer Drehzahl (Ne) des Kompressors hat, aufweist, und das Ausstoßdruckgrenzwertberechnungsmittel den Ausstoßdruckgrenzwert (PdU1) unter Bezugnahme auf die Drehzahl des Kompressors, die durch das Kompressordrehzahlerfassungs- oder abschätzmittel erfaßt oder abgeschätzt wird, berechnet.

23. Die Kühlkreislaufsteuereinheit gemäß Anspruch 22, wobei die Steuereinheit ferner ein Kühlkreislauflasterfassungsmittel zur Erfassung einer thermischen Last des Kühlkreislaufs aufweist, und das Ausstoßdruckgrenzwertberechnungsmittel den Ausstoßdruckgrenzwert (PdU1) unter Bezugnahme auf die thermische Last des Kühlkreislaufs, die durch das Kühlkreislauflasterfassungsmittel erfaßt wird, zusätzlich zu der Drehzahl (Ne) des Kompressors (18), berechnet.

24. Die Kühlkreislaufsteuereinheit gemäß Anspruch 23, wobei der Kühlkreislauf ein Kühlkreislauf ist, der in einem Klimaanlagensystem für Fahrzeuge vorgesehen ist, und das Kühlkreislauflasterfassungsmittel die thermische Last aus jeder Kombination aus einer Außenlufttemperatur (Tamb) und einer Fahrzeugfahrgeschwindigkeit (Ne) oder einer Kondensationstemperatur (Tcond) des Kältemittels oder eines Außenluftsensors (26) erfaßt.

25. Die Kühlkreislaufsteuereinheit gemäß einem der Ansprüche 14 bis 24, wobei die Steuereinheit ferner ein Gebläse (6) aufweist, das Luft zu dem Verdampfer (7) sendet, und das Ansaugdruckabschätzmittel einen Ansaugdruck (Ps) unter Bezugnahme auf eine Verdampfertemperatur (Teva) und/oder auf einen physikalischen Wert, der eine Korrelation zu einer Kältemittelflußrate (Gr) hat, abschätzt.

26. Die Kühlkreislaufsteuereinheit gemäß Anspruch 25, wobei die Verdampfertemperatur (Teva) eine Lufttemperatur unmittelbar nach dem Durchgang durch den Verdampfer oder eine Kältemitteltemperatur nahe des Verdampfers oder eine Temperatur an einer Position zwischen Rippen des Verdampfers oder eine Temperatur an einer Oberfläche eines Kältemittelrohrs von einem Eingang des Verdampfers zu einer Ansaugöffnung des Kompressors ist.

**Revendications**

1. Unité de commande d'un cycle frigorifique, prévue pour un cycle frigorifique comprenant un compresseur (18), qui est un compresseur à déplacement variable dont un déplacement est commandé par un signal de commande externe (ΔPdPs), un condenseur (19) de fluide frigorigène, un évaporateur (7) de fluide frigorigène, et un moyen d'estimation ou de détection de la pression d'aspiration prévu pour estimer ou détecter une valeur physique à l'aide d'une corrélation avec une pression d'aspiration (Ps) du compresseur,
   **caractérisée en ce qu'**
   elle comprend :

   un moyen d'estimation ou de détection de la différence de pression agencé pour estimer ou détecter une valeur physique à l'aide d'une corrélation avec une différence de pression entre une pression de refoulement (Pd) et la pression d'aspiration du compresseur ; et
   un moyen d'estimation de la pression de refoulement prévu pour estimer la pression de refoulement du compresseur en se référant à la valeur physique à l'aide d'une corrélation avec la pression d'aspiration du compresseur estimée ou détectée par le moyen d'estimation ou de détection de la pression d'aspiration, et à la valeur physique à l'aide d'une corrélation avec une différence de pression entre la pression de refoulement et la pression d'aspiration du compresseur estimée ou détectée par le moyen d'estimation ou de détection de la différence de pression.

2. Unité de commande pour un cycle frigorifique selon la revendication 1,
   dans laquelle l'unité de commande comprend en outre un moyen de commande du déplacement du compresseur agencé pour commander un déplacement du compresseur à déplacement variable, et un moyen de calcul de la valeur limite de la pression de refoulement prévu pour calculer une valeur limite supérieure (Pdu1) de la pression de refoulement (Pd) du compresseur (18), et cette pression de refoulement du compresseur est ajustée en commandant le déplacement du compresseur par le moyen de commande du déplacement du compresseur, en se référant à la pression de refoulement du compresseur estimée par le moyen d'estimation de la pression de refoulement et à la valeur limite de la pression de refoulement du compresseur calculée par le moyen de calcul de la valeur limite de la pression de refoulement.

3. Unité de commande pour un cycle frigorifique selon la revendication 2,
   dans laquelle, en se référant à la valeur limite de la pression de refoulement du compresseur (18) calculée par le moyen de calcul de la valeur limite de la pression de refoulement et à la pression de refoulement (Pd) du compresseur estimée par le moyen d'estimation de la pression de refoulement, immédiatement après ou après l'expiration d'une durée prédéterminée une fois que la pression de refoulement estimée a dépassé la valeur limite de la pression de refoulement (Pdu1), le déplacement du compresseur ou la différence de pression entre la pression de refoulement (Pd) et la pression d'aspiration (Ps) du compresseur est commandé(e) de manière à être diminué(e) par le moyen de commande du déplacement du compresseur.

4. Unité de commande pour un cycle frigorifique selon la revendication 3,
   dans laquelle, lorsque la pression de refoulement (Pd) du compresseur (18) estimée par le moyen d'estimation de la pression de refoulement diminue sur une valeur de la valeur A prédéterminée, qui est inférieure à la valeur limite de la pression de refoulement (Pdu1), ou plus basse, la commande destinée à diminuer le déplacement du compresseur ou la différence de pression entre la pression de refoulement et la pression d'aspiration du compresseur est annulée, et la commande de l'unité de commande retourne sur une commande habituelle.

5. Unité de commande pour un cycle frigorifique selon la revendication 2,
   dans laquelle l'unité de commande comprend en outre un moyen d'arrêt du compresseur destiné à interrompre un signal de commande du déplacement émis vers le compresseur (18) ou à arrêter l'entraînement du compresseur, et en se référant à la valeur limite de la pression de refoulement (Pdu1) du compresseur calculée par le moyen de calcul de la valeur limite de la pression de refoulement et à la pression de refoulement du compresseur estimée par le moyen d'estimation de la pression de refoulement, immédiatement après ou après l'expiration d'une durée prédéterminée une fois que la pression de refoulement a dépassé la valeur limite de la pression de refoulement, le signal de commande du déplacement (ΔPdPs) émis vers le compresseur est interrompu ou l'entraînement du compresseur est arrêté par le moyen d'arrêt du compresseur.

6. Unité de commande pour un cycle frigorifique selon la revendication 5,
   dans laquelle, lorsque la pression de refoulement (Pd) du compresseur (18) estimée par le moyen d'estimation de

**EP 1 489 370 B1**

la pression de refoulement diminue sur une valeur de la valeur A prédéterminée, qui est inférieure à la valeur limite de la pression de refoulement (PdU1), ou plus basse, la commande destinée à interrompre le signal de commande du déplacement émis vers le compresseur ou à arrêter l'entraînement du compresseur par le moyen d'arrêt du compresseur est annulée, et la commande de l'unité de commande retourne sur une commande habituelle.

**7.** Unité de commande pour un cycle frigorifique selon la revendication 2,
dans laquelle, pour commander la pression de refoulement (Pd) du compresseur (18) estimée par le moyen d'estimation de la pression de refoulement sur une pression de refoulement autorisée prédéterminée comme une valeur au même niveau que la valeur limite de la pression de refoulement (PdU1) du compresseur calculée par le moyen de calcul de la valeur limite de la pression de refoulement ou comme une pression de refoulement cible inférieure, la pression de refoulement du compresseur est commandée en commandant le déplacement du compresseur en comparant la pression de refoulement autorisée et la pression de refoulement estimée ou en se référant à un écart entre celles-ci.

**8.** Unité de commande pour un cycle frigorifique selon la revendication 7,
dans laquelle l'unité de commande comprend en outre un moyen d'arrêt du compresseur destiné à interrompre un signal de commande du déplacement émis vers le compresseur (18) ou à arrêter l'entraînement du compresseur, et un moyen de détection de la pression de refoulement destiné à détecter la pression de refoulement (Pd) du compresseur et, lorsqu'une pression de refoulement détectée dépasse la valeur limite de la pression de refoulement (PdU1), le moyen d'arrêt du compresseur interrompt le signal de commande du déplacement (ΔPdPs) ou arrête l'entraînement du compresseur.

**9.** Unité de commande pour un cycle frigorifique selon l'une quelconque des revendications 2 à 8,
dans laquelle l'unité de commande comprend en outre un moyen de détection ou d'estimation de la vitesse de rotation du compresseur destiné à détecter ou à estimer une valeur physique présentant une corrélation avec une vitesse de rotation (Ne) du compresseur (18), et le moyen de calcul de la valeur limite de la pression de refoulement calcule la valeur limite de la pression de refoulement (PdU1) en se référant à la vitesse de rotation du compresseur détectée ou estimée par le moyen de détection ou d'estimation de la vitesse de rotation du compresseur.

**10.** Unité de commande pour un cycle frigorifique selon la revendication 9,
dans laquelle l'unité de commande comprend en outre un moyen de détection de la charge du cycle frigorifique destiné à détecter une charge thermique du cycle frigorifique, et le moyen de calcul de la valeur limite de la pression de refoulement calcule la valeur limite de la pression de refoulement en se référant à la charge thermique du cycle frigorifique détectée par le moyen de détection de la charge du cycle frigorifique en plus de la vitesse de rotation (Ne) du compresseur (18).

**11.** Unité de commande pour un cycle frigorifique selon la revendication 10,
dans laquelle le cycle frigorifique est un cycle frigorifique prévu dans un système de climatisation pour véhicules, et le moyen de détection de la charge du cycle frigorifique détecte la charge thermique à partir d'une combinaison quelconque d'une température de l'air extérieur (Tamb) et d'une vitesse de roulement du véhicule, ou d'une température de condensation (Tcond) du fluide frigorigène, ou d'un capteur d'air extérieur (26).

**12.** Unité de commande pour un cycle frigorifique selon l'une quelconque des revendications 1 à 11,
dans laquelle l'unité de commande comprend en outre un ventilateur (26) envoyant de l'air vers l'évaporateur (7), et le moyen d'estimation de la pression d'aspiration estime une pression d'aspiration (Ps) en se référant à une température de l'évaporateur (Teva) et/ou à une valeur physique ayant une corrélation avec un débit du fluide frigorigène (Gr).

**13.** Unité de commande pour un cycle frigorifique selon la revendication 12,
dans laquelle la température de l'évaporateur (Teva) est une température de l'air immédiatement après avoir traversé l'évaporateur (7), ou une température de fluide frigorigène à proximité de l'évaporateur, ou une température à un emplacement entre les ailettes de l'évaporateur, ou une température à une surface d'un tube de fluide frigorigène partant d'une entrée de l'évaporateur jusqu'à un orifice d'aspiration du compresseur.

**14.** Unité de commande d'un cycle frigorifique, prévue pour un cycle frigorifique comprenant un compresseur (18), qui est un compresseur à déplacement variable dont un déplacement est commandé en commandant une différence de pression entre une pression de refoulement (Pd) du compresseur et une pression d'aspiration (Ps) du compresseur par un signal de commande externe (ΔPdPs), un condenseur (19) de fluide frigorigène, un évaporateur (7) de fluide frigorigène, et un moyen d'estimation ou de détection de la pression d'aspiration agencé pour estimer ou détecter une valeur physique à l'aide d'une corrélation avec la pression d'aspiration du compresseur,

**caractérisée en ce qu'**

elle comprend :

un moyen de calcul du signal d'entrée prévu pour calculer un signal d'entrée émis vers le compresseur à l'aide d'une corrélation avec une différence de pression entre la pression de refoulement et la pression d'aspiration du compresseur ; et

un moyen d'estimation de la pression de refoulement prévu pour estimer la pression de refoulement du compresseur en se référant à la valeur physique à l'aide d'une corrélation avec la pression d'aspiration du compresseur estimée ou détectée par le moyen d'estimation ou de détection de la pression d'aspiration, et un signal de commande du déplacement servant de signal d'entrée à l'aide d'une corrélation avec la différence de pression entre la pression de refoulement et la pression d'aspiration du compresseur calculée par le moyen de calcul du signal d'entrée.

15. Unité de commande pour un cycle frigorifique selon la revendication 14,
dans laquelle l'unité de commande comprend en outre un moyen de commande du déplacement du compresseur agencé pour commander un déplacement du compresseur à déplacement variable (18), et un moyen de calcul de la valeur limite de la pression de refoulement agencé pour calculer une valeur limite supérieure (PdU1) de la pression de refoulement du compresseur, et cette pression de refoulement (Pd) du compresseur est ajustée en commandant le déplacement du compresseur par le moyen de commande du déplacement du compresseur, en se référant à la pression de refoulement du compresseur estimée par le moyen d'estimation de la pression de refoulement et à la valeur limite de la pression de refoulement du compresseur calculée par le moyen de calcul de la valeur limite de la pression de refoulement.

16. Unité de commande pour un cycle frigorifique selon la revendication 15,
dans laquelle, en se référant à la valeur limite de la pression de refoulement (PdU1) du compresseur (18) calculée par le moyen de calcul de la valeur limite de la pression de refoulement et à la pression de refoulement (Pd) du compresseur estimée par le moyen d'estimation de la pression de refoulement, immédiatement après ou après l'expiration d'une durée prédéterminée une fois que la pression de refoulement estimée a dépassé la valeur limite de la pression de refoulement, le déplacement du compresseur ou la différence de pression entre la pression de refoulement et la pression d'aspiration (Ps) du compresseur est commandé(e) de manière à être diminué(e) par le moyen de commande du déplacement du compresseur.

17. Unité de commande pour un cycle frigorifique selon la revendication 16,
dans laquelle, lorsque la pression de refoulement (Pd) du compresseur (18) estimée par le moyen d'estimation de la pression de refoulement diminue sur une valeur de la valeur A prédéterminée, qui est inférieure à la valeur limite de la pression de refoulement (PdU1), ou plus basse, la commande destinée à diminuer le déplacement du compresseur ou la différence de pression entre la pression de refoulement et la pression d'aspiration (Ps) du compresseur est annulée, et la commande de l'unité de commande retourne sur une commande habituelle.

18. Unité de commande pour un cycle frigorifique selon la revendication 15,
dans laquelle l'unité de commande comprend en outre un moyen d'arrêt du compresseur destiné à interrompre un signal de commande du déplacement (ΔPdPs) émis vers le compresseur (18) ou à arrêter l'entraînement du compresseur, et en se référant à la valeur limite de la pression de refoulement (PdU1) du compresseur calculée par le moyen de calcul de la valeur limite de la pression de refoulement et à la pression de refoulement (Pd) du compresseur estimée par le moyen d'estimation de la pression de refoulement, immédiatement après ou après l'expiration d'une durée prédéterminée une fois que la pression de refoulement a dépassé la valeur limite de la pression de refoulement, le signal de commande du déplacement émis vers le compresseur est interrompu ou l'entraînement du compresseur est arrêté par le moyen d'arrêt du compresseur.

19. Unité de commande pour un cycle frigorifique selon la revendication 18,
dans laquelle, lorsque la pression de refoulement (Pd) du compresseur (18) estimée par le moyen d'estimation de la pression de refoulement diminue sur une valeur de la valeur A prédéterminée, qui est inférieure à la valeur limite de la pression de refoulement, ou plus basse, la commande destinée à interrompre le signal de commande du déplacement (ΔPdPs) émis vers le compresseur ou à arrêter l'entraînement du compresseur par le moyen d'arrêt du compresseur est annulée, et la commande de l'unité de commande retourne sur une commande habituelle.

**20.** Unité de commande pour un cycle frigorifique selon la revendication 15,
dans laquelle, pour commander la pression de refoulement (Pd) du compresseur (18) estimée par le moyen d'estimation de la pression de refoulement sur une pression de refoulement autorisée prédéterminée comme une valeur au même niveau que la valeur limite de la pression de refoulement (PdU1) du compresseur calculée par le moyen de calcul de la valeur limite de la pression de refoulement ou comme une pression de refoulement cible inférieure, la pression de refoulement du compresseur est commandée en commandant le déplacement du compresseur en comparant la pression de refoulement autorisée et la pression de refoulement estimée ou en se référant à un écart entre celles-ci.

**21.** Unité de commande pour un cycle frigorifique selon la revendication 20,
dans laquelle l'unité de commande comprend en outre un moyen d'arrêt du compresseur destiné à interrompre un signal de commande du déplacement émis vers le compresseur (18) ou à arrêter l'entraînement du compresseur, et un moyen de détection de la pression de refoulement destiné à détecter la pression de refoulement (Pd) du compresseur et, lorsqu'une pression de refoulement détectée dépasse la valeur limite de la pression de refoulement (PdU1), le moyen d'arrêt du compresseur interrompt le signal de commande du déplacement ou arrête l'entraînement du compresseur.

**22.** Unité de commande pour un cycle frigorifique selon l'une quelconque des revendications 15 à 21,
dans laquelle l'unité de commande comprend en outre un moyen de détection ou d'estimation de la vitesse de rotation du compresseur destiné à détecter ou à estimer une valeur physique présentant une corrélation avec une vitesse de rotation (Ne) du compresseur (18), et le moyen de calcul de la valeur limite de la pression de refoulement calcule la valeur limite de la pression de refoulement (PdU1) en se référant à la vitesse de rotation du compresseur détectée ou estimée par le moyen de détection ou d'estimation de la vitesse de rotation du compresseur.

**23.** Unité de commande pour un cycle frigorifique selon la revendication 22,
dans laquelle l'unité de commande comprend en outre un moyen de détection de la charge du cycle frigorifique destiné à détecter une charge thermique du cycle frigorifique, et le moyen de calcul de la valeur limite de la pression de refoulement calcule la valeur limite de la pression de refoulement (PdU1) en se référant à la charge thermique du cycle frigorifique détectée par le moyen de détection de la charge du cycle frigorifique en plus de la vitesse de rotation (Ne) du compresseur (18).

**24.** Unité de commande pour un cycle frigorifique selon la revendication 23,
dans laquelle le cycle frigorifique est un cycle frigorifique prévu dans un système de climatisation pour véhicules, et le moyen de détection de la charge du cycle frigorifique détecte la charge thermique à partir d'une combinaison quelconque d'une température de l'air extérieur (Tamb) et d'une vitesse de roulement du véhicule (Ne), ou d'une température de condensation (Tcond) du fluide frigorigène, ou d'un capteur d'air extérieur (26).

**25.** Unité de commande pour un cycle frigorifique selon l'une quelconque des revendications 14 à 24,
dans laquelle l'unité de commande comprend en outre un ventilateur (6) envoyant de l'air vers l'évaporateur (7), et le moyen d'estimation de la pression d'aspiration estime une pression d'aspiration (Ps) en se référant à une température de l'évaporateur (Teva) et/ou à une valeur physique ayant une corrélation avec un débit du fluide frigorigène (Gr).

**26.** Unité de commande pour un cycle frigorifique selon la revendication 25,
dans laquelle la température de l'évaporateur (Teva) est une température de l'air immédiatement après avoir traversé l'évaporateur, ou une température de fluide frigorigène à proximité de l'évaporateur, ou une température à un emplacement entre les ailettes de l'évaporateur, ou une température à une surface d'un tube de fluide frigorigène partant d'une entrée de l'évaporateur jusqu'à un orifice d'aspiration du compresseur.

FIG. 1

# FIG. 2

DISCHARGE/SUCTION
PRESSURE DIFFERENCE

MINIMUM
DISPLACEMENT

SIGNAL
INTERRUPTION

$\Delta PdPsmin$    $\Delta PdPs1$

$\Delta PdPs$ SIGNAL

EVAPORATOR EXIT AIR
TEMPERATURE TARGET
VALUE Toff

EVAPORATOR EXIT AIR
TEMPERATURE Teva

EVAPORATOR EXIT AIR
TEMPERATURE CONTROL
MEANS

SIGTe=P+I
P=KpX(Toff-Teva)
I=In-i+Kp/Ki
X(Toff-Teva)

DISPLACEMENT
CONTRON SIGNAL
CALCULATED VALUE
FOR EVAPORATOR
TEMPERATURE
CONTROL SIGTe

DISPLACEMENT CONTROL
SIGNAL DETERMINATION
MEANS

CONTROL OF OUTPUT TO
DISPLACEMENT CONTROLLER
OR CLUTCH CONTROLLER
REFERRING TO
SIGTe, Pd, Pdh, AND Pdul

※CALCULATION OF
PERMISSIBLE PRESSURE
(Pdh)
Pdh=Pdh (PREDETERMINED
VALUE) =Pdul-B

OUTSIDE AIR
TEMPERATURE Tamb

ENGINE ROTATIONAL
SPEED Ne

VEHICLE RUNNING
SPEED VS

CONDENSATION
TEMPERATURE Tcond

DISCHARGE PRESSURE
LIMIT VALUE
CALCULATION MEANS

※1 Pdul=f (Ne)

DISCHARGE
PRESSURE
LIMIT VALUE

DISCHARGE
PRESSURE
ESTIMATED
VALUE

DISPLACEMENT
CONTROL SIGNAL

DISPLACEMENT
CONTROLLER

CLUTCH
SIGNAL

CLUTCH
CONTROLLER

EVAPORATOR
TEMPERATURE Te

REFRIGERANT
FLOW RATE Gr

SUCTION PRESSURE
ESTIMATION MEANS

※2 Ps=F (Teva, Gr)

SUCTION
PRESSURE
ESTIMATED
VALUE

DISCHARGE
PRESSURE
ESTIMATION
MEANS

Pd=F (ΔPdPs, Ps)

EXTERNAL DISPLACEMENT
CONTROL SIGNAL ΔPdPs

※1 FOLLOWING CONTROL
MAY BE EMPLOYED.

Pdul=f (Ne, Tamb)
Pdul=f (Ne, Tamb, VS)
Pdul=f (Tcond)

※2 FOLLOWING CONTROL
MAY BE EMPLOYED.

Ps=f (Te, Gr)

# FIG. 3

EP 1 489 370 B1

# FIG. 4

```
        ┌──────────────────────────┐
        │  SUCTION PRESSURE        │
        │  ESTIMATION Ps           │
        └──────────────────────────┘
                    │
        ┌──────────────────────────┐
        │  DISCHARGE PRESSURE      │
        │  ESTIMATION Pd           │
        └──────────────────────────┘
                    │
        ┌──────────────────────────┐
        │  DISCHARGE PRESSURE LIMIT│
        │  VALUE CALCULATION Pdul  │
        └──────────────────────────┘
                    │
              ╱─────────────╲        N
             ╱  Pd>Pdul ?    ╲───────────┐
              ╲─────────────╱             │
                    │ Y                   │
              ╱─────────────╲        N    │
             ╱  TIME T       ╲────────────┼──►
              ╲  EXPIRES     ╱             │
               ╲───────────╱              │
                    │ Y                   │
        ┌──────────────────────────┐      │
        │ ※COMPRESSOR SMALL        │◄───┐ │
        │  DISPLACEMENT CONTROL    │    │ │
        │  △PdPs=PdPs1             │    │ │
        └──────────────────────────┘    │ │
                    │                    │ │
              ╱─────────────╲        N   │ │
             ╱  Pd≦A ?       ╲───────────┘ │
              ╲─────────────╱              │
                    │ Y                    │
                    └──────────────────────┤
                                           │
        ┌──────────────────────────┐       │
        │  USUAL DISPLACEMENT      │◄──────┘
        │  CONTROL                 │
        └──────────────────────────┘
```

※FOLLOWING CONTROL MAY
  BE EMPLOYED.
・CLUTCH OFF CONTROL
・COMPRESSOR MINIMUM
  DISPLACEMENT CONTROL
  △PdPs=△PdPsmin
・CONSTANT VALUE
  DISPLACEMENT
  REDUCTION CONTROL

# FIG. 5

```
┌─────────────────────────┐
│ USUAL DISPLACEMENT      │
│ CONTROL                 │
└─────────────────────────┘
            │
            ▼
┌─────────────────────────┐
│ SUCTION PRESSURE        │
│ ESTIMATION Ps           │
└─────────────────────────┘
            │
            ▼
┌─────────────────────────┐
│ DISCHARGE PRESSURE      │
│ ESTIMATION Pd           │
└─────────────────────────┘
            │
            ▼
┌─────────────────────────┐
│ DISCHARGE PRESSURE LIMIT│
│ VALUE CALCULATION Pdul   │
└─────────────────────────┘
            │
            ▼
┌─────────────────────────┐
│ PERMISSIBLE DISCHARGE   │
│ PRESSURE VALUE          │
│ CALCULATION Pdh          │
└─────────────────────────┘
            │
            ▼
      ╱─────────────╲         N
     ╱  Pd=Pdh ?     ╲──────────┐
     ╲               ╱          │
      ╲─────────────╱           │
            │ Y                 ▼
            │        ┌─────────────────────────┐
            │        │ DISPLACEMENT CONTROL    │
            │        │ SIGNAL CALCULATION      │
            │        └─────────────────────────┘
            │                   │
            │                   ▼
            │        ┌─────────────────────────┐
            │        │ DISPLACEMENT CONTROL    │
            │        │ SIGNAL OUTPUT           │
            │        └─────────────────────────┘
```

## FIG. 6

SUCTION PRESSURE
ESTIMATION Ps

DISCHARGE PRESSURE
ESTIMATION Pd

DISCHARGE PRESSURE
LIMIT VALUE
CALCULATION Pdul

PERMISSIBLE DISCHARGE
PRESSURE VALUE
CALCULATION Pdh

※FOLLOWING CONTROL MAY
BE EMPLOYED.
·CLUTCH OFF CONTROL
·COMPRESSOR MINIMUM
DISPLACEMENT CONTROL
$\Delta PdPs=\Delta PdPsmin$
·CONSTANT VALUE
DISPLACEMENT
REDUCTION CONTROL

Pd>Pdoff ? — N

Y

PRESSURE SWITCH
OPERATES

TIME T
EXPIRES AT A
CONDITION OF
Pd>Pdul — N

Y

Pd≤Pdh ? — N

Y

※COMPRESSOR SMALL
DISPLACEMENT CONTROL
$\Delta PdPs=\Delta PdPsl$

DISPLACEMENT CONTROL
SIGNAL CALCULATION

Pd≤Pdh ? — N

Y

DISPLACEMENT CONTROL
SIGNAL OUTPUT

USUAL DISPLACEMENT
CONTROL